# EUROPEAN PATENT APPLICATION

(11) **EP 2 056 433 A2**
(43) Date of publication of application: **06.05.2009**
(21) Application number: 08166599.4
(22) Date of filing: 14.10.2008
(51) Int. Cl.: H02M 1/32

(54) **Power supply apparatus**

(30) Priority: 29.10.2007 JP 2007279900
(71) Applicant: Funai Electric Co., Ltd., Daito-shi Osaka 574-0013 (JP)
(72) Inventor: Udagawa, Kazuhiko Funai Electric Co., Ltd., Osaka 574-0013 (JP)
(74) Representative: Erny, Tobias

(57) **Abstract**

A sub MPU (32A) of a DVD player includes a voltage detecting portion (321) for detecting a minimum voltage value (Vmin) that is a lowest value among a predetermined number of voltages supplied from a main DC power supply (84) to devices disposed in the DVD player at an interval of a predetermined period of time set in advance, a voltage deciding portion (322) for deciding whether or not the minimum voltage value (Vmin) detected by the voltage detecting portion (321) is lower than or equal to a voltage threshold value (Vsh) set in advance, and a power off instructing portion (325) for cutting off electric power supplied to the main DC power supply (84) via the relay (83) when the voltage deciding portion (322) decides that the minimum voltage value is lower than or equal to the voltage threshold value (Vsh).

## Description

### BACKGROUND OF THE INVENTION

### Field of the Invention

The present invention relates to a power supply apparatus disposed in electronic equipment for generating DC voltages having a predetermined number of voltage values set in advance from electric power supplied from a commercial power supply so as to supply the generated DC voltages to devices disposed in the electronic equipment.

### Description of Related Art

Conventionally, a switching power supply apparatus is used for supplying electric power in various types of electrical equipment. In addition, there may be a case where intermittent switching operation is performed for reducing power consumption when the load is light in the switching power supply apparatus of a ringing choke converter (RCC) type or the like.

In addition, a double power supply type may be adopted in some cases, which is equipped with a main power supply having large output capacity and a sub power supply having small output capacity for reducing power consumption, and an output from the main power supply is used in a normal mode while an output from the sub power supply is used in a stand-by mode.

For instance, JP-A-2006-94676 proposes a switching power supply apparatus that supplies a voltage lower than a voltage threshold value that enables a control circuit to operate to a power source terminal of the control circuit after receiving the stand-by signal instructing the switching power supply apparatus to be the stand-by mode from the outside. According to this switching power supply apparatus, power consumption can be reduced in the case where the double power supply type is adopted.

However, if a short circuit occurs in the device that is connected to the main power supply in the conventional power supply apparatus such as the above-mentioned switching power supply apparatus, it may be difficult to turn off the main power supply promptly and securely. As a result, breakdown of the device, or overheating of the main power supply or the like may occur.

### SUMMARY OF THE INVENTION

An object of the present invention is to provide a power supply apparatus that is capable of turning off the main power supply securely by a simple structure when an abnormal state has occurred.

A power supply apparatus according to the present invention is disposed in electronic equipment for generating DC voltages having a predetermined number of voltage values set in advance from electric power supplied from a commercial power supply so as to supply the generated DC voltages to devices disposed in the electronic equipment. The power supply apparatus includes a first DC generating means for generating the DC voltages having the predetermined number of voltage values from the electric power supplied from the commercial power supply, a second DC generating means for generating a DC voltage having one voltage value from the electric power supplied from the commercial power supply, power off execution means disposed between the first DC generating means and the commercial power supply, so as to cut off the electric power supplied from the commercial power supply to the first DC generating means, and control means for performing power supply control of the power supply apparatus by the DC voltage having the one voltage value supplied from the second DC generating means. The control means includes voltage detecting means for detecting a minimum voltage value that is a lowest value among the predetermined number of voltages supplied from the first DC generating means to the devices at an interval of a predetermined period of time set in advance, voltage deciding means for deciding whether or not the minimum voltage value detected by the voltage detecting means is lower than or equal to a voltage threshold value set in advance, and power off instructing means for cutting off the electric power supplied to the first DC generating means via the power off execution means when the voltage deciding means decide that the minimum voltage value is lower than or equal to the voltage threshold value.

According to the power supply apparatus of the present invention as described above, when a short circuit occurs in a device disposed in the electronic equipment, the occurrence of the abnormal state is detected by the control means that is supplied with the DC voltage from the second DC generating means other than the first DC generating means, so that the electric power supplied to the first DC generating means is cut off via the power off execution means. Therefore, the first DC generating means can be turned off securely by a simple structure when the abnormal state occurs.

In addition, in a power supply apparatus according to a preferred embodiment of the present invention, the voltage threshold value may be set to a minimum voltage value that enables the device to work that is supplied with the minimum voltage value among the predetermined number of voltage values via the first DC generating means.

Since the voltage threshold value is set to the minimum voltage value that enables the device to work that is supplied with the minimum voltage value among the predetermined number of voltage values, the first DC generating means are turned off when the device supplied with the minimum voltage value becomes the state where it cannot work normally, Thus, occurrence of an abnormal state such as a short circuit can be detected promptly.

In addition, in a power supply apparatus according to a further preferred embodiment of the present invention, the control means may include count means for counting the number of times of successive decisions by the voltage deciding means that the minimum voltage value is lower than or equal to the voltage threshold value at an interval of a predetermined period of time when the voltage deciding means decides that the minimum voltage value is lower than or equal to the voltage threshold value, and number of times deciding means for deciding whether or not the number of times counted by the count means is the number of times threshold value set in advance or larger. Further, the power off instructing means may cut off the electric power supplied to the first DC generating means via the power off execution means only in the case where the number of times deciding means decides that the number of times counted by the count means is the number of times threshold value or larger.

In other words, the electric power supplied to the first DC generating means is cut off via the power off execution means only in the case where it is decided that the counted number of times is the number of times threshold value set in advance or larger. Therefore, if it is misdetected due to noise or the like that the minimum voltage value is lower than or equal to the voltage threshold value, it can be avoided to cut off the electric power supplied to the first DC generating means. Thus, the main power supply (here, the first DC generating means) can be turned off appropriately by a simple structure when an abnormal state occurs.

In addition, in a power supply apparatus according to a further preferred embodiment of the present invention, the second DC generating means may be made up of a ringing choke converter (RCC) type switching power supply.

Therefore, it is possible to reduce power consumption in the state where the first DC generating means (main power supply) is turned off (i.e., in a sleep state),

In addition, in a power supply apparatus according to a further preferred embodiment of the present invention, the power off execution means may be made up of a relay.

Therefore, it is possible to turn off the first DC generating means (main power supply) securely by a simpler structure when an abnormal state occurs.

### BRIEF DESCRIPTION OF THE DRAWINGS

FIG. 1 is a structural diagram showing an example of a DVD player equipped with a power supply apparatus according to the present invention.
FIG. 2 is a structural diagram showing an example of a structure of the power supply apparatus according to the present invention.
FIG. 3 is a structural diagram showing an example of a structure of a principal part (mainly a sub MPU) of the power supply apparatus according to the present invention.
FIG. 4 is a flowchart showing an example of an operation of the power supply apparatus (mainly a sub MPU).
FIG. 5 is a timing chart showing an example of a power off process performed by a power off instructing portion.

### DETAILED DESCRIPTION OF THE PREFERRED EMBODIMENTS

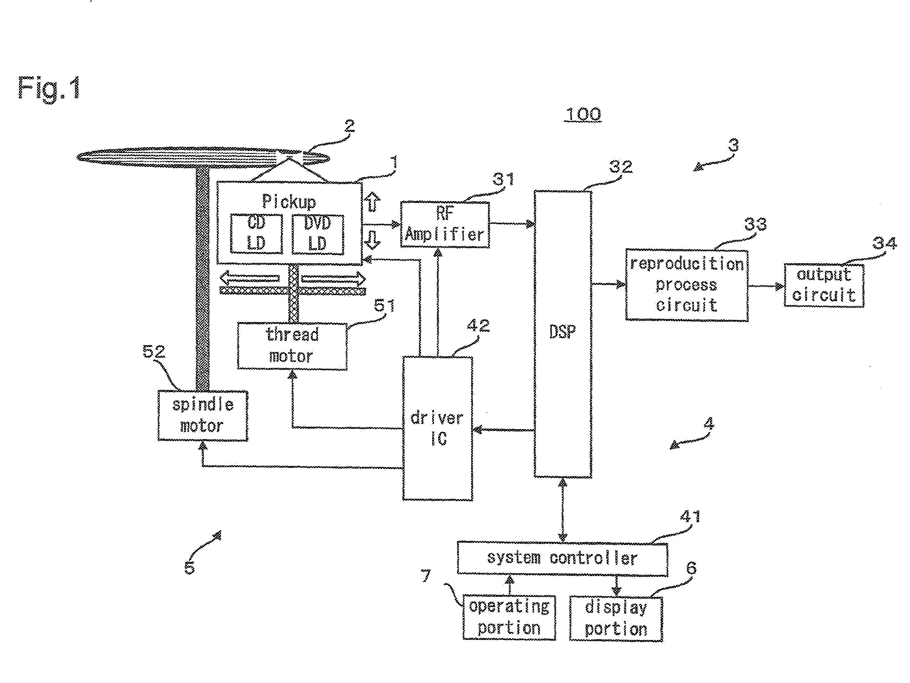

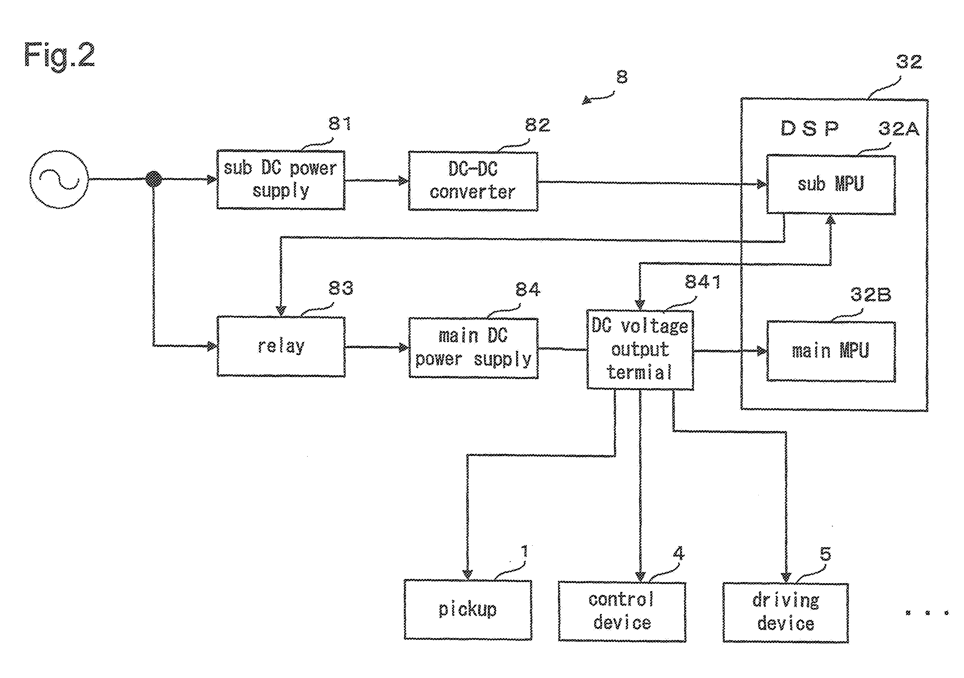

Hereinafter, an embodiment of the present invention will be described with reference to the attached drawings. FIG. 1 is a structural diagram showing an example of a DVD player equipped with a power supply apparatus according to the present invention. The DVD player (corresponding to the electronic equipment) includes an optical pickup 1, an output device 3, a control device 4, a driving device 5, a display portion 6, an operating portion 7, and a power supply apparatus 8 (not shown in Fig. 1, but see FIG. 2).

The optical pickup 1 is equipped with a laser diode (LD) for a compact disk (CD) and an LD for a digital versatile disk (DVD), so that reflection light from an optical disc 2 (CD or DVD) to be read is converted into an electric signal. Thus, various information such as audio information and video information stored in the optical disc 2 (CD or DVD) is read. The LD for CD emits laser beam for reading information stored in a CD. The LD for DVD (corresponding to the light source for DVD) emits laser beam for reading information stored in a DVD.

In addition, the optical pickup 1 is adapted to be capable of moving in the radial direction and in the vertical direction (closing and separating directions) of the optical disc 2 driven by a thread motor 51 in accordance with an instruction from a digital signal processor (DSP) 32.

The output, device 3 converts information from the optical pickup 1 such as audio information or video information into sounds and pictures so as to deliver them to a speaker and a monitor (not shown), and it includes an RF amplifier 31, the DSP 32, a reproduction process circuit 33, and an output circuit 34. The RF amplifier 31 amplifies a signal from the optical pickup 1 corresponding to the audio information. the video information or the like.

The DSP 32 and the reproduction process circuit 33 performs various information processings (e.g., image processing or the like) for reproduction on the signal from the RF amplifier 31. The output circuit 34 performs digital -to-analog (DA) conversion process or the like for delivering the information from the reproduction process circuit 33 to a speaker and a monitor (not shown).

The control device 4 controls operations of the optical pickup 1 and the driving device 5 based on the instruction received from the operating portion 7, and it includes a system controller 41 and a driver 42. The system controller 41 receives information from the operating portion 7 and transmits the same to the DSP 32 and transmits information from the DSP 32 to the display portion 6. The driver 42 controls the operations of the optical pickup 1 and the driving device 5 based oil the instruction from the DSP 32.

The driving device 5 includes the thread motor 51 and a spindle motor 52. The thread motor 5 moves the optical pickup 1 in the radial direction and in the vertical direction of the optical disc 2 based on an instruction from the driver 42. The spindle motor 52 drives the optical disc 2 to rotate based on an instruction from the driver 42.

The display portion 6 includes a liquid crystal display (LCD) or the like, and it displays information from the DSP 32 in a manner visible from the outside. The operating portion 7 includes various operating buttons or the like and delivers an actuating signal to the DSP 32 corresponding to an operation by the user. The power supply apparatus 8 generates DC voltages having a predetermined number of voltage values set in advance from power supplied by the commercial power supply and supplies the same to various devices disposed in the DVD player 100.

FIG. 2 is a structural diagram showing an example of a structure of the power supply apparatus 8 according to the present invention. The power supply apparatus 8 is disposed in an appropriate position in the DVD player 100 and generates DC voltages having a predetermined number of (here, five) voltage values (here, 12, 10, 5,3.3 and 2.5 volts) set in advance from electric power supplied from a commercial power supply, so as to supply the generated DC voltages to various devices disposed in the DVD player 100.

As shown in FIG. 2, the power supply apparatus 8 includes a sub DC power supply 81, a DC-DC converter 82, a relay 83, and a main DC power supply 84. In addition, the DSP 32 includes a sub micro processing unit (MPU) 32A and a main MPU 32B. Note that the sub MPU 32A (corresponding to the control means) constitutes a part of the power supply apparatus according to the present invention.

The sub DC power supply 81 (corresponding to the second DC generating means) is made up of a ringing choke converter (RCC) type switching power supply of a small power (e.g., 1 watt) and generates a DC voltage having one voltage value (here, 5 volts) from electric power supplied from a commercial power supply. The DC voltage generated by the sub DC power supply 81 is supplied to the sub MPU 32A via the DC-DC converter 82.

The DC-DC converter 82 converts the DC voltage of 5 volts supplied from the sub DC power supply 81 into the DC voltage of 3.3 volts and supplies it to the sub MPU 32A.

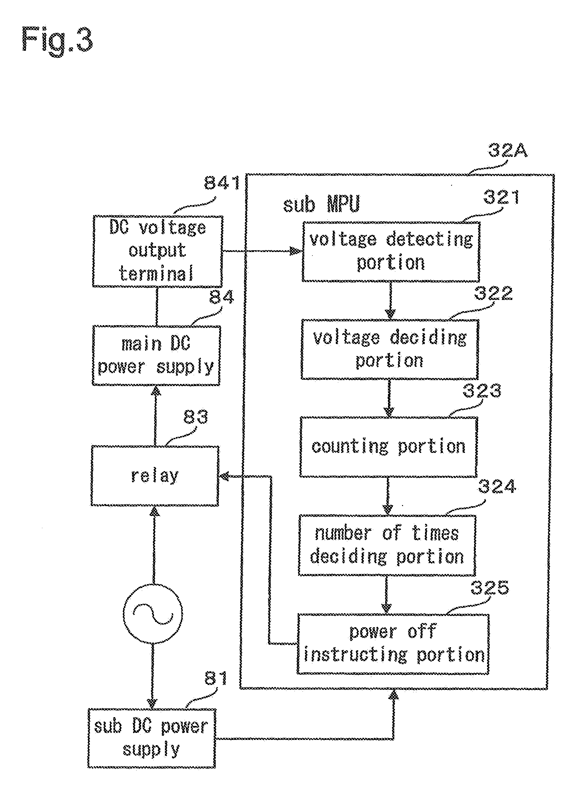

The relay 83 (corresponding to the power off execution means) is disposed between the main DC power supply 84 and the commercial power supply, and it cuts off the power supplied from the commercial power supply to the main DC power supply 84 in accordance with an instruction from the sub MPU 32A (a power off instructing portion 325 shown in FIG. 3).

The main DC power supply 84 (corresponding to the first DC generating means) is made up of an RCC type switching power supply of a large power (e.g., 50 watts), and it generates DC voltages having a predetermined number of (here, live) voltage values (here, 12, 10, 5,3.3 and 2.5 volts) from electric power supplied from the commercial power supply via the relay 83.

In addition, the main DC power supply 84 has a DC voltage output terminal 841 corresponding to the five generated voltage values (here, 12, 10, 5, 3.3 and 2.5 volts) respectively, and it supplies various devices disposed in the DVD player 100 with DC powers of the voltage values adapted to the individual devices via the DC voltage output terminal 841.

For instance, the DC power of 12 volts is supplied to the thread motor 51, the spindle motor 52 and the like of the driving device 5 shown in FIG. 1, the DC power of 5 volts is supplied to the LD for CD, the LD for DVD and the like of the optical pickup 1 shown in FIG. 1, and the DC power of 3.3 volts is supplied to the main MPU 32B, the system controller 41 and the like of the control device 4 shown in FIG. 1.

The sub MPU 32A (corresponding to the control means) is supplied with a DC voltage having a voltage value of 3.3 volts from the sub DC power supply 81 via the DC-DC converter 82, so as to perform a power supply control to the DVD player 100.

The main MPU 32B is supplied with a DC voltage having a voltage value of 3.3 volts from the main DC power supply 84, so as to control the general operation of the DVD player 100.

FIG. 3 is a structural diagram showing an example of a structure of a principal part (mainly a sub MPU 32A) of the power supply apparatus according to the present invention. The sub MPU 32A has functional portions including a voltage detecting portion 321, a voltage deciding portion 322, a counting portion 323, a number of times deciding portion 324, and a power off instructing portion 325.

Here, the sub MPU 32A reads out a control program stored in a read only memory (ROM) or the like (not shown) and executes the program so as to work as the voltage detecting portion 321, the voltage deciding portion 322, the counting portion 323, the number of times deciding portion 324, the power off instructing portion 325, and the like.

In addition, among various data stored in a random access memory (RAM) and the ROM (not shown), data that can be stored in a removable recording medium may be adapted to be capable of being read by a driver of a hard disk drive, an optical disc drive, a flexible disc drive, a silicon disc drive, a cassette media reader or the like, for instance. In this case, the recording medium corresponds to a hard disk, an optical disc, a flexible disc, a CD, a DVD, a semiconductor memory or the like, for instance.

The voltage detecting portion 321 (corresponding to the voltage detecting means) detects a minimum voltage value Vmin that is a minimum value of the predetermined number of (here, five) voltages to be supplied to the various devices disposed in the DVD player 100 from the main DC power supply 84 (the DC voltage output terminal 841), at an interval of a predetermined period of time (here, 20 msec), in the state where electric power is supplied to the main DC power supply 84 (hereinafter referred to as a power on state).

More specifically, the voltage detecting portion 321 detects voltage values of the terminals corresponding to the voltage values of 12,10, 5, 3.3 and 2.5 volts disposed in the DC voltage output terminal 841 and detects a lowest voltage value among the detected voltage values as the minimum voltage value Vmin.

The voltage deciding portion 322 (corresponding to the voltage deciding means) decides whether or not the minimum voltage value Vmin detected by the voltage detecting portion 321 is lower than or equal to a voltage threshold value Vsh that is set in advance. Here, the voltage threshold value Vsh is set to the minimum voltage value (here, 2.0 volts) that enables the device to work that is supplied with the minimum voltage value (here, 2.5 volts) among the predetermined number of (here, five) voltage values (here, 12, 10, 5, 3.3 and 2.5 volts) via the main DC power supply 84.

When the voltage deciding portion 322 decides that the minimum voltage value Vmin is lower than or equal to the voltage threshold value Vsh, the counting portion 323 (corresponding to the count means) counts the number of times N of successive decisions by the voltage deciding portion 322 that it is lower than or equal to the voltage threshold value Vsh.

The number of times deciding portion 324 (corresponding to the number of times deciding means) decides whether or not the number of times N counted by the counting portion 323 is the number of times threshold value Nsh set in advance (e.g., five) or larger.

Only if the voltage deciding portion 322 decides that the minimum voltage value Vmin is lower than or equal to the voltage threshold value Vsh and if the number of times deciding portion 324 decides that the number of times N is the number of times threshold value Nsh or larger, the power off instructing portion 325 (corresponding to the power off instructing means) cuts off the electric power supplied to the main DC power supply 84 via the relay 83. In other words, even if the voltage deciding portion 322 decides that the minimum voltage value Vmin is lower than or equal to the voltage threshold value Vsh, if the number of times deciding portion 324 decides that the number of times N is smaller than the number of times threshold value Nsh, the electric power supplied to the main DC power supply 84 is not cut off via the relay 83.

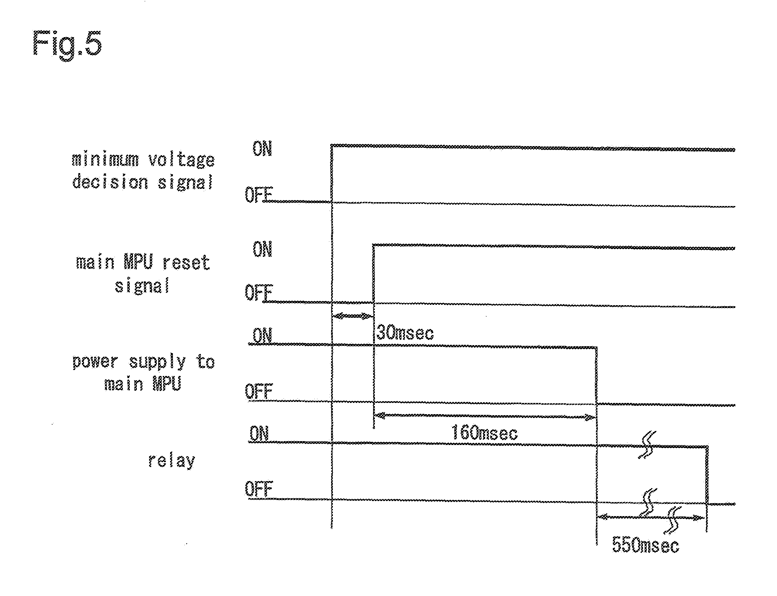

Further, if it is decided that the minimum voltage value Vmin is lower than or equal to the voltage threshold value Vsh and if it is decided that the number of times N is the number of times threshold value Nsh or larger, the power off instructing portion 325 cuts off the electric power supplied to the main DC power supply 84 in accordance with the same procedure as in the case where the power on state is changed to a stand-by state. More specifically, a reset signal is delivered to the main MPU 32B, so that the electric power supplied to the main MPU 32B is cut off at the timing when the reset process of the main MPU 32B is finished. After that, the electric power supplied to the main DC power supply 84 is cut off via the relay 83 (see FIG. 5).

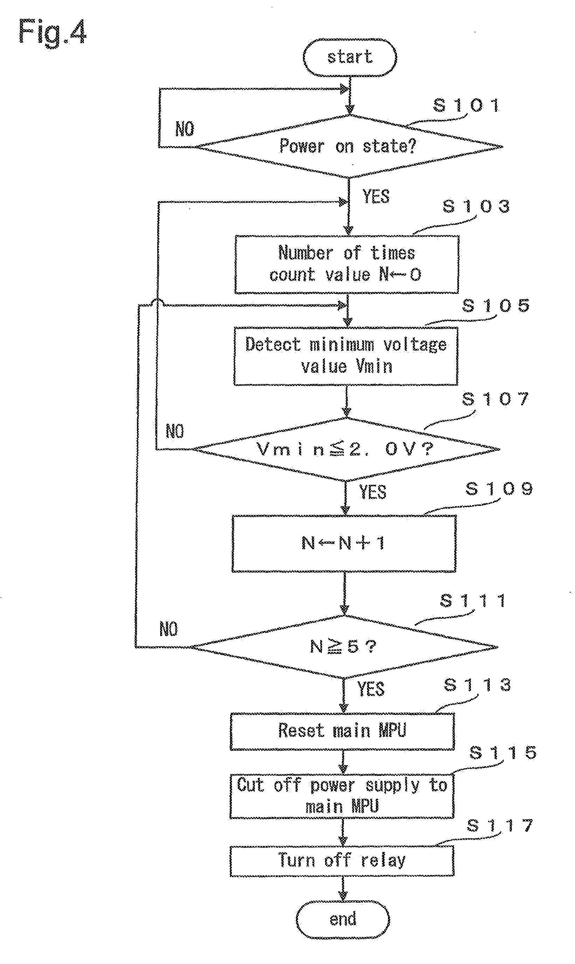

FIG. 4 is a flowchart showing an example of an operation of the power supply apparatus (mainly sub MPU 32A). First, the voltage detecting portion 321 decides whether or not it is in the power on state (S101). If it is decided that it is not in the power on state (NO in S101), the process is to be in the stand-by state. If it is decided to be in the power on state (YES in S101), the counting portion 323 initializes the number of times N to be "0" (S103). Then, the voltage detecting portion 321 detects the minimum voltage value Vmin at an interval of a predetermined period of time (here, 20 msec) set in advance (S105).

Next, the voltage deciding portion 322 decides whether or not the minimum voltage value Vmin detected in the step S105 is lower than or equal to the voltage threshold value Nsh (here, 2.0 volts) (S107). If it is decided that the minimum voltage value Vmin is more than the voltage threshold value Vsh (here, 2.0 volts) (NO in S107), the process goes back to the step S 103, and the process of the step S 103 and the subsequent steps is performed repeatedly, If it is decided that the minimum voltage value Vmin is lower than or equal to the voltage threshold value Vsh (here, 2.0 volts) (YES in S107), the counting portion 323 increments the number of times N by one (S109).

Then, the number of times deciding portion 324 decides whether or not the number of times N is the number of times threshold value Nsh (e.g., five) or larger (S111). If it is decided that the number of times N is smaller than the number of times threshold value Nsh (here, five) (NO in S111), the process goes back to the step S105, and the process of the step S105 and subsequent processes is performed repeatedly. If it is decided that the number of times N is the number of times threshold value Nsh (here, five) or larger (YES in S111), the power off instructing portion 325 delivers a reset signal to the main MPU 32B (S113). Then, the power off instructing portion 325 stops to supply electric power to the main MPU 32B (S115). Next, the power off instructing portion 325 cuts off the power supplied to the main DC power supply 84 via the relay 83 (S117), and the process is finished.

FIG. 5 is a timing chart showing an example of a power off process performed by the power off instructing portion 325. First, if it is decided that the number of times N is the number of times threshold value Nsh (here, five) or larger, a minimum voltage decision signal is generated. Then, 30 msec after the timing when the minimum voltage decision signal is generated, a reset signal is delivered to the main MPU 32B. Next, 160 msec after the timing when the reset signal is delivered (i.e., after completion of the reset process in the main MPU 32B), the power supply to the main MPU 32B is stopped. Then, 550 msec after the timing when the power supply to the main MPU 32B is stopped, the electric power supplied to the main DC power supply 84 is cut off via the relay 83.

In this way, the main DC power supply 84 generates the DC voltages having a predetermined number of (here, five) of voltage values (here, 12, 10, 5, 3.3 and 2.5 volts) from the electric power supplied from a commercial power supply, and the sub DC power supply 81 generates the DC voltages having one voltage value (here, 5 volts) from the electric power supplied from a commercial power supply. Then, the electric power supplied from the commercial power supply to the main DC power supply 84 is cut off by the relay 83 disposed between the main DC power supply 84 and the commercial power supply. In addition, the DC voltage having one voltage value (here, 3.3 volts) is supplied to the sub MPU 32A from the sub DC power supply 81 via the DC-DC converter 82, and the sub MPU 32A for performing the power supply control detects the minimum voltage value Vmin that is the lowest value among the predetermined number of (here, five) voltages supplied from the main DC power supply 84 to the devices disposed in the DVD player 100, at the interval of a predetermined period of time (here, 2.0 msec) set in advance. Then, it is decided whether or not the detected minimum voltage value Vmin is lower than or equal to the voltage threshold value Vsh (here, 2.0 volts). If it is decided that the minimum voltage value Vmin is lower than or equal to the voltage threshold value Vsh and if it is decided that the number of times N is the number of times threshold value Nsh or larger, the electric power supplied to the main DC power supply 84 is cut off via the relay 83. Therefore, the main power supply (here, the main DC power supply 84) can be turned off securely by a simple structure when an abnormal state occurs.

More specifically, the sub DC power supply 81 supplies the DC voltage having one voltage value (here, 3.3 volts) via the DC-DC converter 82, and the sub MPU 32A that performs the power supply control detects the minimum voltage value Vmin that is the lowest value among a predetermined number of voltages supplied to the devices disposed in the DVD player 100 from the main DC power supply 84 for generating DC voltages having a predetermined number of (here, five) voltage values (here, 12, 10, 5, 3.3 and 2.5 volts), at an interval of a predetermined period of time (here, 20 msec) set in advance. If it is decided that the detected minimum voltage value Vmin is lower than or equal to the voltage threshold value Vsh (here, 2.0 volts) set in advance, the electric power supplied to the main DC power supply 84 is cut off via the relay 83. Therefore, if a short circuit occurs in a device disposed in the DVD player 100, for instance, the occurrence of the abnormal state is detected by the sub MPU 32A that is supplied with the DC voltage from the sub DC power supply 81 other than the main DC power supply 84, so that the electric power supplied to the main DC power supply 84 is cut off via the relay 83. Therefore, the main DC power supply 84 can be turned off securely by a simple structure when the abnormal state occurs.

In addition, since the voltage threshold value Vsh is set to the minimum voltage value (here, 2.0 volts) that enables the device to work that is supplied with the minimum voltage value (here, 2.5 volts) among the predetermined number of (here, five) voltage values (here, 12, 10, 5, 3.3 and 2.5 volts) via the main DC power supply 84, the main power supply (here, the main DC power supply 84) can be turned off promptly by a simple structure when the abnormal state occurs.

More specifically, since the voltage threshold value Vsh is set to the minimum voltage value (here, 2.0 volts) that enables the device to work that is supplied with the minimum voltage value (here, 2.5 volts) among the predetermined number of (here, five) voltage values (here, 12, 10, 5, 3.3 and 2.5 volts), the main DC power supply 84 is turned off when the device supplied with the minimum voltage value (here, 2.5 volts) becomes the state where it cannot work normally, Therefore, the abnormal state such as a short circuit can be detected promptly.

In addition, if it is decided, that the minimum voltage value Vmin is lower than or equal to the voltage threshold value Vsh (here, 2.0 volts), the number of times N of successive decisions that it is lower than or equal to the voltage threshold value (here, 2.0 volts) is counted. Then, it is decided whether or not the counted number of times N is the number of times threshold value Nsh (here, five) set in advance or larger. The electric power supplied to the main DC power supply 84 is cut off via the relay 83 only in the case where it is decided that the counted number of times N is the number of times threshold value Nsh (here, five) or larger. Therefore, the main power supply (here, the main DC power supply 84) can be turned off appropriately by a simple structure when an abnormal state occurs.

More specifically, if it is decided that the minimum voltage value Vmin is lower than or equal to the voltage threshold value Vsh, the number of times N of successive decisions that it is lower than or equal to the voltage threshold value Vsh is counted. The electric power supplied to the main DC power supply 84 is cut off via the relay 83 only in the case where it is decided that the counted number of times N is the number of times threshold value Nsh (here, five) set in advance or larger. Therefore, if it is misdetected due to noise or the like that the minimum voltage value Vmin is lower than or equal to the voltage threshold value Vsh, it can be avoided to cut off the electric power supplied to the main DC power supply 84. Thus, the main power supply (here, the main DC power supply 84) can be turned off appropriately by a simple structure when an abnormal state occurs.

In addition, since the sub DC power supply 81 is made up of an RCC type switching power supply, it is possible to reduce power consumption in the state where the main power supply (here, the main DC power supply 84) is turned off (i.e.. in a so-called sleep state).

In addition, since the power off execution means is made up of the relay 83, the main power supply (here, the main DC power supply 84) can be turned off securely by a simpler structure when an abnormal state occurs.

Note that the present invention can be applied to other structures as follows.
(A) Although this embodiment describes the case where the electronic equipment is the DVD player 100, the electronic equipment can be any other equipment as long as a plurality of DC voltages are supplied to various devices disposed in the electronic equipment. For instance, the electronic equipment can be a bard disk drive (HDD) recorder, a personal computer, a printer, a set top box (STB) or the like.

(B) Although this embodiment describes the case where the DVD player 100 is equipped with two MPUs (the sub MPU 32A and the main MPU 32B), it is possible that the DVD player 100 is equipped with one MPU.

(C) Although this embodiment describes the case where the sub MPU 32A works as functional portions including the voltage detecting portion 321, the voltage deciding portion 322, the counting portion 323, the number of times deciding portion 324, the power off instructing portion 325 and the like, at least one functional portion among the voltage detecting portion 321, The voltage deciding portion 322, the counting portion 323, the number of times deciding portion 324 and the power off instructing portion 325 may be realized by hardware such as a circuit.

(D) Although this embodiment describes the case where each of the sub DC power supply 81 and the main DC power supply 84 is made up of the RCC type switching power supply, at least one of the sub DC power supply 81 and the main DC power supply 84 may be made up of other type (e.g., a step down type) switching power supply.

(E) Although this embodiment describes the case where the power off execution means is made up of the relay 83, the power off execution means may be made up of other switch (e.g., a semiconductor switch or the like).

(F) Although this embodiment describes the case where the power off instructing portion 325 cuts off the electric power supplied to the main DC power supply 84 only in the case where the number of times deciding portion 324 decides that the counted number of times N is the number of times threshold value Nsh or larger, it is possible to adopt another structure in which the power off instructing portion 325 cuts off the electric power supplied to the main DC power supply 84 when the voltage deciding portion 322 decides that the minimum voltage value Vmin is lower than or equal to the voltage threshold value Vsh, without counting by the counting portion 323. In this case, it is possible to turn of the main DC power supply 84 promptly when an abnormal state occurs.

(G) Although this embodiment describes the case where the sub DC power supply 81 supplies the DC power to the sub MPU 32A via the DC-DC converter 82, it is possible to adopt another structure in which the sub DC power supply 81 supplies the DC power directly to the sub MPU 32A. In this case, the structure can be simplified.

(H) Note that the values used in this embodiment are merely the values for explaining the operations in this embodiment, and actually appropriate values for the practical structure will be used without limiting to these values.

Features, components and specific details of the structure of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. A power supply apparatus disposed in electronic equipment for generating DC voltages having a predetermined number of voltage values set in advance from electric power supplied from a commercial power supply so as to supply the generated DC voltages to devices disposed in the electronic equipment, the power supply apparatus **characterized by** comprising:
a first DC generating means for generating the DC voltages having the predetermined number of voltage values from the electric power supplied from the commercial power supply;
a second DC generating means for generating a DC voltage having one voltage value from the electric power supplied from the commercial power supply;
a power off execution means disposed between the first DC generating means and the commercial power supply, so as to cut off the electric power supplied from the commercial power supply to the first DC generating means; and
a control means for performing power supply control of the power supply apparatus by the DC voltage having the one voltage value supplied from the second DC generating means, the control means includes
a voltage detecting means for detecting a minimum voltage value that is a lowest value among the predetermined number of voltages supplied from the first DC generating means to the devices at an interval of a predetermined period of time set in advance,
a voltage deciding means for deciding whether or not the minimum voltage value detected by the voltage detecting means is lower than or equal to a voltage threshold value set in advance, and
a power off instructing means for cutting off the electric power supplied to the first DC generating means via the power off execution means when the voltage deciding means decide that the minimum voltage value is lower than or equal to the voltage threshold value.

2. The power supply apparatus according to claim 1, **characterized in that** the voltage threshold value is set to a minimum voltage value that enables the device to work that is supplied with the minimum voltage value among the predetermined number of voltage values via the first DC generating means.

3. The power supply apparatus according to claim 1 or 2, **characterized in that** the control means includes
a count means for counting the number of times of successive decisions by the voltage deciding means that the minimum voltage value is lower than or equal to the voltage threshold value at an interval of a predetermined period of time when the voltage deciding means decides that the minimum voltage value is lower than or equal to the voltage threshold value, and
a number of times deciding means for deciding whether or not the number of times counted by the count means is the number of times threshold value set in advance or larger, and
the power off instructing means cuts off the electric power supplied to the first DC generating means via the power off execution means only in the case where the number of times deciding means decides that the number of times counted by the count means is the number of times threshold value or larger.

4. The power supply apparatus according to any one of claims 1 to 3, **characterized in that** the second DC generating means is made up of a ringing choke converter (RCC) type switching power supply.

5. The power supply apparatus according to any one of claims 1 to 4, **characterized in that** the power off execution means is made up of a relay.
